# EUROPEAN PATENT SPECIFICATION

(11) **EP 1 710 037 B1**
(45) Date of publication and mention of the grant of the patent: **12.10.2016**
(21) Application number: 05075814.3
(22) Date of filing: 05.04.2005
(51) Int. Cl.: B23K 9/09

(54) **APPARATUS AND METHOD FOR SHORT-CIRCUIT ARC WELDING**
VORRICHTUNG UND VERFAHREN ZUM KURZSCHLUSS-LICHTBOGENSCHWEISSEN
DISPOSITIF ET MÉTHODE DE SOUDAGE À L'ARC COURT-CIRCUIT

(43) Date of publication of application: 11.10.2006
(73) Proprietor: VERMAAT TECHNICS B.V., 3235 XK Rockanje (NL)
(72) Inventor: Vermaat, Huibrecht Pieter, 3235 XK Rockanje (NL)
(74) Representative: Peters, Sebastian Martinus

(56) References cited:
- EP-A- 0 369 367
- EP-A- 1 232 825
- EP-A- 1 384 546
- US-A- 5 726 419
- PATENT ABSTRACTS OF JAPAN vol. 007, no. 153 (M-226), 5 July 1983 (1983-07-05) & JP 58 061966 A (HONDA GIKEN KOGYO KK), 13 April 1983 (1983-04-13)
- PATENT ABSTRACTS OF JAPAN vol. 011, no. 281 (M-624), 11 September 1987 (1987-09-11) & JP 62 081271 A (NATL RES INST FOR METALS), 14 April 1987 (1987-04-14)

## Description

The invention pertains to an apparatus and a method for welding by depositing drops of molten metal at the end of a welding electrode into a weld puddle, in particular for short-circuit arc welding.

In a short-circuit arc welding method, such as the Gas Metal Arc Welding (GMAW) method, a molten tip of a welding wire short-circuits with the weld puddle and the tip is "burned-off" from the welding wire due to a pinch-effect caused by the short-circuit current. After the burn-off, an arc is formed between the welding wire and the weld puddle. The arc will cause the tip of the welding wire to meld and the molten tip of the welding wire is moved towards the weld puddle. The molten tip of a welding wire short-circuits with the weld puddle and the process repeats itself.

A disadvantage of short-circuit welding is the occurrence of spatter. Spatter occurs during the burning-off of the welding wire. Spatter particularly occurs when too much power is supplied when the short-circuit is clearing, in particular during the transition from a short-circuit state to an arc state.

In order to reduce the spatter, it is known to detect and predict when the short-circuit is about to clear, and to reduce the power or current just before the short-circuit clears. For example, the arc voltage or its first derivative may be compared to a threshold value for the detecting and predicting of the clearing of the short-circuit. However, such relative simple methods for detecting and predicting often results, among other things, in missed or false short-circuit clearing predictions.

In order to increase the reliability of the welding process, various algorithms have been developed to control the welding process. For example, the United States Patent 6,087,626 discloses the use of a feedback signal for controlling the welding process, wherein the feedback signal is a real-time signal indicative of the heat input to each drop at the tip of the welding wire. The method also predicts when the short-circuit is about to clear in response to the power delivered. However, such more complicated methods for predicting the clearing of the short-circuit result, among other things, in a relatively slow welding process.

Accordingly, a first object of this invention is to provide an apparatus and a method for welding providing an efficient way for reducing the occurrence of spatter.

A second object of the invention is to provide an apparatus and method for welding without a means for predicting the clearance of the short-circuit and/or for reducing the power or current just before the short-circuit clears.

A third object of the invention is to provide an apparatus and method in which the welding conditions are less critical and/or can be readily set.

A fourth object of the invention is to provide an apparatus and method for high-speed welding.

In order to achieve one or more of the foregoing objects, a first aspect of the invention provides a method of welding by depositing drops of molten metal at the end of a welding electrode into a weld puddle for short-circuit arc welding, comprising the steps of:
moving the welding electrode towards the weld puddle, at least until the drop of molten metal at the end of a welding electrode short-circuits with the weld puddle;
providing a current to the welding electrode;
superimposing a periodic signal having a frequency and an amplitude onto the current, at least until after the short-circuit has cleared; and
removing the periodic signal from the current after the short-circuit has cleared.
When the drop of molten metal short-circuits with the weld puddle, the short-circuit current causes a contracting force in the liquid metal column between the welding electrode and the weld puddle. Due to this force the liquid metal column contracts (pinch-effect).

Due to the periodic signal superimposed on the current, and in particular on the short-circuit current, the current is repeatedly increased and decreased; at each cycle of the periodic signal, the current decreases after it has reached its maximum value. Due to the superimposed periodic signal the occurrence of spatter is at least reduced. In an embodiment, the periodic signal may comprise an alternating signal.

Moreover it was found that the spatter was greatly reduced over a large range of welding conditions allowing a less critical adjustment of the welding conditions.

Because of the decreasing of the current, each time it has reached its maximum, the method of the inventions does not require the predictions of the clearance of the short-circuit and for reducing the power or current just before the short-circuit clears. Thus the complicated predicting methods are no longer necessary, thus allowing welding at high speeds.

It is noted that the use of pulses in arc welding is for example disclosed in EP 0 369 367, EP 1 232 825, US 5,726,419, Patent abstracts of Japan vol. 007, no. 153 and Patent abstracts of Japan vol.011, no. 281. However these documents relate to pulsed arc welding, which is a method where the current waveform of the whole welding cycle is implemented as a series of current pulses. In such pulse welding, the widths of the current pulses control the magnitude or height of the waveform.

In an embodiment, the current and/or the frequency of the periodic signal is adjusted, preferably continuously varied, at least until after the short-circuit has cleared.

Due to the periodic signal superimposed on the current, the contracting force is also periodically modulated and the column of liquid metal between the welding electrode and the weld puddle periodically contracts. By adjusting the current, a natural frequency of the liquid metal column can be changed.

It is believed that the contraction of the liquid metal column, and thus the pinch-effect, may be greatly enhanced when the frequency of the periodic signal is near to, or is substantially equal to a natural frequency of the liquid metal column. The enhanced pinch-effect yields a rapid clearing of the short-circuit substantially without spatter.

By continuously varying the current and/or the frequency of the periodic signal, at least until after the short-circuit has cleared, the natural frequency of the liquid metal column and/or the frequency of the periodic signal are continuously varied. As soon as the frequency of the periodic signal is near to, or is substantially equal to a natural frequency of the liquid metal column, the pinch-effect is enhanced, yielding a rapid clearing of the short-circuit substantially without spatter. In view of this variation of the current and/or the frequency of the periodic signal, it is not necessary in this embodiment to determine a natural frequency of the liquid metal column.

Preferably the frequency of the periodic signal is tuned to a value substantially equal to a resonance frequency of a liquid metal column between the welding electrode and the weld puddle, and/or a resonance frequency of the liquid metal column between the welding electrode and the weld puddle is tuned to a value substantially equal to the frequency of the periodic signal.

When the liquid metal column in resonance is with the periodic signal, the periodic contraction of the liquid metal column may be out of phase with the periodic signal. That is, the contraction will be at its greatest after the current has reached its maximum value and is already decreasing. Preferably, the welding conditions may be chosen such that the contraction is in anti-phase with the periodic signal. That is, the contraction will be at its greatest when the current substantially reaches its minimum value. In this case the short-circuit will clear when the power supplied to the short-circuit is substantially at his lowest.

In an embodiment the method according to the invention further comprises the steps of:
providing a feedback signal proportional to a voltage across the welding electrode and the weld puddle;
determining when the feedback signal reaches a first reference value V1 corresponding to a short-circuit circuiting of the welding electrode and the weld puddle;
providing a current to the welding electrode and superimposing the periodic signal onto the current;
increasing the current level with the periodic signal superimposed thereon after the feedback signal has reached the first reference value V1;
determining when the feedback signal reaches a second reference value V2 corresponding to a clearing of the short-circuit circuiting; and
decreasing the current through the welding electrode after the feedback signal has reached the second reference value V2.

By using the feedback signal the welding process according to the invention can be controlled. In particular, the simple comparing the feedback signal to a reference value allows a rapid control of a high speed welding process.

In an embodiment, the step of increasing the current with the periodic signal superimposed thereon after the feedback signal has reached the first reference value V1 comprises the stages of:
decreasing and holding the current to a first value I1 during a first period of time T1 after the feedback signal has reached the first reference value V1;
increasing and subsequently holding the current to a second value I2 during a second period of time T2, after expiry of the first period of time T1; and
superimposing the periodic signal onto the current and increasing the current with the periodic signal superimposed thereon, after expiry of the first period of time T1.

Due to the low current during the first period of time T1, the drop of liquid metal at the end of the welding electrode is allowed to merge with the material in the puddle, without an immediate action of the pinch-effect.

Next, the current is relatively rapidly increased to the second value I2. The holding of the current at the second value I2 may be very short. The rapid increase is used to save time.

Subsequently, the current with the superimposed periodic signal thereon is increased relatively slowly towards the third value I3, which increase changes the natural frequencies of the liquid metal column, allows a natural frequency to tune to a value substantially equal to the frequency of the periodic signal.

Preferably, the increasing of the current with the periodic signal superimposed thereon comprises the increasing of the average value of the current and/or the increasing of the amplitude of the periodic signal.

In an embodiment, the method according to the invention further comprises the steps of:
increasing and holding the current to a third value I3 during a third period of time T3 after the feedback signal has reached the second reference value V2 ;
decreasing and subsequently holding the current to a fourth value I4 during a fourth period of time T4, after expiry of the third period of time T3; and
increasing and subsequently holding the current to a fifth value I5 after expiry of the fourth period of time T4.

Due to the low current during the fourth period of time T4, the weld puddle is allowed to calm down after the rapid clearing of the short-circuit, which may further prevent the production of spatter.

By subsequently increasing and holding the current to the fifth value I5, sometimes called the "plasma boost", energy can be provide for melting the tip of the welding electrode. The energy input of the plasma boost determines, among other things, the amount of melted metal.

When the welding electrode is provided with the required amount of liquid metal, the current is preferably decreased to the sixth value I6 before the welding electrode and the weld puddle short-circuit again. This decreased current I6 enables that the power supplied at the moment of short-circuiting is low, thus substantially preventing the occurrence of spatter when the welding electrode and the weld puddle short-circuit.

According to a second aspect, the invention provides a method for producing a line shaped weld, preferably a continuous line shaped weld, by cyclical repeating the steps of the method of welding according to the invention and/or embodiments thereof as described above.

In an embodiment, the welding electrode comprises a consumable welding wire. Preferably, the welding wire is continuously fed towards the weld puddle.

In an embodiment the method comprises the step of feeding the welding wire towards the weld puddle at a speed equal to or in excess of 3.5 meters per minute, preferable equal to or in excess of 6 meters per minute.

According to a third aspect, the invention provides a welding apparatus for welding by depositing drops of molten metal at the end of a welding electrode into a weld puddle, in particular for short-circuit arc welding, comprising:
a power source comprising a current output in electrical communication with the welding electrode;
modulating means for superimposing a periodic signal having a frequency and an amplitude on the current output of the power source; and
first controlling means for controlling the current output and/or the frequency of the periodic signal.

Preferably the modulating means comprise a waveform generator coupled to the power source for superimposing a periodic signal, preferably a harmonic signal, having a frequency and an amplitude, on the output of the power source.

In an embodiment, the first controlling means is arranged for adjusting, preferably continuously varying, the current output and/or the frequency of the periodic signal, preferably at least during the depositing of the drops of molten metal into the weld puddle.

In a further embodiment, the first controlling means comprises scanning means for scanning the current output and/or the frequency of the periodic signal over a preset range, preferably at least during the depositing of each drop of molten metal into the weld puddle.

In an embodiment, the welding apparatus comprises feedback means for providing a feedback signal proportional to a voltage across the welding electrode and the weld puddle, and second controlling means for controlling the current output and or the frequency of the periodic signal, in dependence to the feedback signal.

In an embodiment, the welding apparatus comprises a first comparator for determining when the feedback signal reaches a first reference value V1 corresponding to a short-circuit circuiting of the welding electrode and the weld puddle, and a second comparator for determining when the feedback signal reaches a second reference value V2 corresponding to a clearing of the short-circuit circuiting, wherein the second controlling means preferably are arranged for increasing the current through the welding electrode in response to a signal from the first comparator and for decreasing the current through the welding electrode in response to a signal from the second comparator.

In an embodiment, the welding electrode comprises a consumable welding wire, and the welding apparatus comprises a welding wire feeding means for feeding the welding wire towards the weld puddle. Preferably the welding wire feeding means are arranged for feeding the welding wire at a speed equal to or in excess of 3.5 meters per minute, preferable equal to or in excess of 6 meters per minute.

According to a fourth aspect, the invention provides a welding apparatus for welding by depositing drops of molten metal at the end of a welding electrode into a weld puddle, in particular for short-circuit circuit arc welding, comprising:
a power source comprising a current output in electrical communication with the welding electrode;
modulating means for superimposing a periodic signal having a frequency and an amplitude on the current output of the power source; and
controlling means for controlling the welding apparatus, wherein the controlling means comprise a data processing system comprising means adapted to carry out each of the steps as defined in the method of welding according to the invention and/or embodiments thereof as described above.

According to a fifth aspect, the invention provides a welding robot comprising a welding apparatus according to the invention and/or embodiments thereof as described above.

According to a sixth aspect, the invention provides a computer program comprising code means adapted to perform all steps defined in the method of welding according to the invention and/or embodiments thereof as described above.

In an embodiment, the invention provides a computer program product comprising a computer readable medium having computer readable code embodied thereon, the program being adapted to perform all steps defined in the method of welding according to the invention and/or embodiments thereof as described above.

Further features and advantage of the invention will become apparent to those skilled in the art upon review of the following exemplary embodiments as shown in the drawings and as described below:
Figure 1 is a schematic representation comprising a graph showing the current and voltage outputs of the various phases for a short-circuit transfer welding cycle;
Figure 2 is a block diagram showing the various steps of an exemplary embodiment of a welding method of the invention; and
Figure 3 is a block diagram showing an exemplary embodiment of a welding apparatus of the invention.

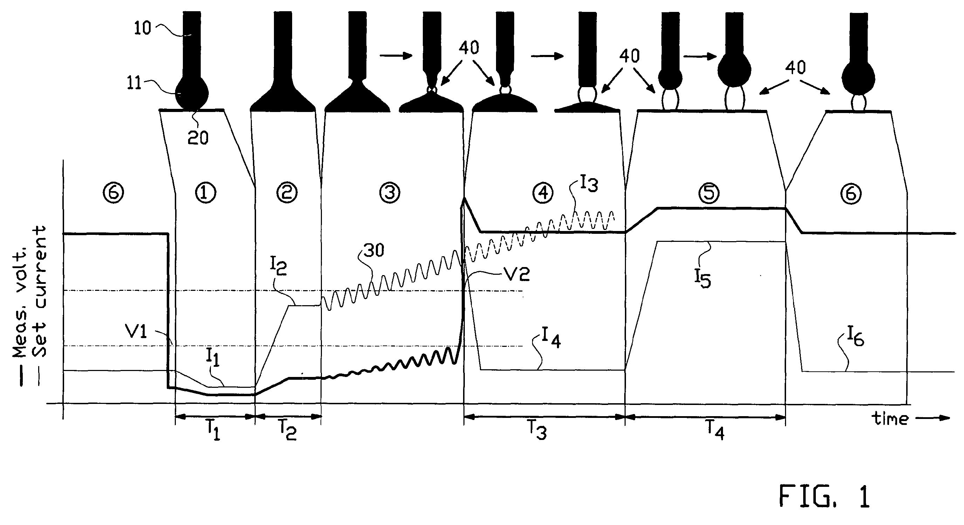

As illustrated in figure 1, a method according of the invention may be divided is several distinct phases:

The first phase 1 (Touch phase) follows after the drop of molten metal 11 at the end of the welding electrode 10 short-circuits with the weld puddle 20, that is when the measured voltage decreases below the first reference value V1. In this first phase 1 the current is lowered to a value I1. The length of the first phase 1 is determined by a preset time-period T1.

In the second phase 2 (Join phase), the drop of molten metal 11 joins with the weld puddle 20, and the current is increased to a value I2. The length of the second phase 2 is determined by a preset time-period T2.

In the third phase 3 (Release phase), the periodic signal 30 is superimposed onto the current and the current with the periodic signal superimposed thereon is increased towards a value I3. This increase is continued until after the measured voltage increases above the second reference value V2, indicating that the short-circuit has cleared and an arc 40 is present between the end of the welding electrode 10 and the weld puddle 20.

In the fourth phase 4 (Settle phase) the current is lowered to a value I4, and the weld puddle 20 is allowed to settle. The length of the fourth phase 4 is determined by a preset time-period T3.

In the fifth phase 5 (Energy phase) the current is raised to a value I5 during a preset time-period T4, in order to provide a new drop of liquid metal 11 at the end of the welding electrode 10.

When the drop 11 comprises the required amount of liquid metal, the current is lowered in the sixth phase 6 (Pre-short-circuit phase) to a value I6. The sixth phase 6 is continued until after the measured voltage decreases below the first reference value V1, indicating that the drop of molten metal 11 at the end of the welding electrode 10 short-circuits with the weld puddle 20.

Subsequently, the cycle is repeated by continuing with the Touch phase 1, Join phase 2, etcetera...

In the method illustrated in figure 1 and described above, the current is reduced after the clearing of the short-circuit, and the arc 40 is ignited.

In contrast, in the known methods, measurements and calculations are performed at least during the Join phase 2 and/of the Release phase 3 to predict when the short-circuit is about to clear, in order to reduce the power or current just before the short-circuit clears.

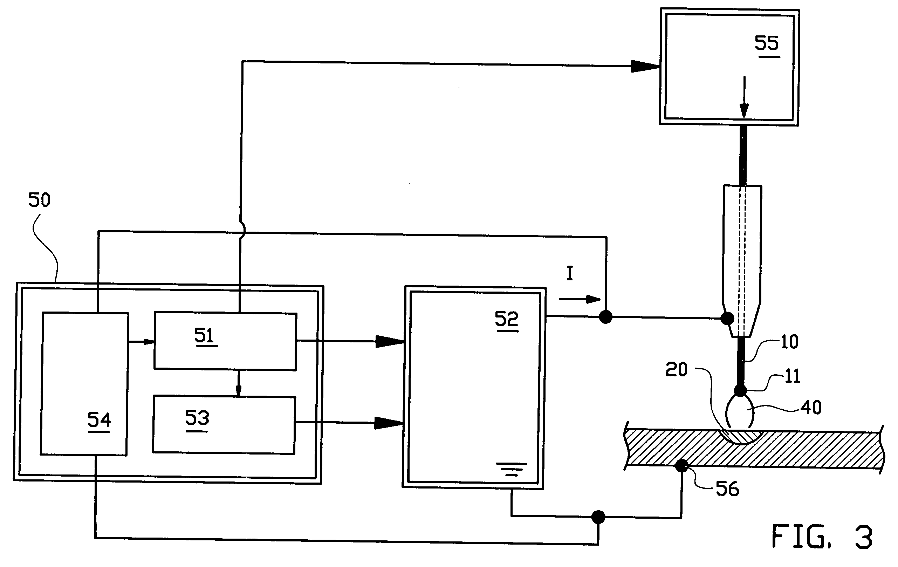

Figure 3 shows an exemplary embodiment of a welding apparatus 50 of the invention, wherein the apparatus 50 is provided with controlling device 51 for controlling the welding apparatus 50. The controlling device 51 comprise a data processing system, such as for example a PLC (Programmable Logic Control) or a microprocessor, comprising means adapted to control each of the phases illustrated in figure 1 and described above. The data processing system is coupled the various components of the welding apparatus 50 for producing the current output is illustrated in figure 1.

This current output may be generated by starting the exemplary procedure "periodicly_called_function" below at regular time-intervals.

```
 /* global constant */
 const double VIP_TIME_PERIOD = .....;
 /* global variables */
 enum {
  VIP_TOUCH,
  VIP_JOIN,
  VIP_RELEASE,
  VIP_SETTLE,
  VIP_ENERGY,
  VIP_PRESHORT
  } vip_state;
  double vip_measured_voltage; /* input */
  double vip_Iprofile; /* output */
  double vip_dI;
  double vip_Iend;
  double vip_time;
  /* selectable parameters */
  struct
  {
  double TOUCH_dI, TOUCH_Iend, TOUCH_tlim;
  double JOIN_dI, JOIN_Iend, JOIN_tlim;
  double RELEASE_dI, RELEASE_Iend;
  double SETTLE_dI, SETTLE_Iend, SETTLE_tlim;
  double ENERGY_dI, ENERGY_Iend, ENERGY_tlim;
 double PRESHORT_dI, PRESHORT_Iend;
  double V_short_circuit;
 double V_free;
 } vip_params;
 void periodicly_called_function(void)
 {
 vip_time=vip_time-VIP_TIME_PERIOD;
 switch (vip_state)
 {
   case VIP_TOUCH:
     if (vip_time<=0)
     {
       vip_state=VIP_JOIN;
       vip_dI=vip_params.JOIN_dI;
       vip_Iend=vip_params.JOIN_Iend;
       vip_time=vip_params.JOIN_tlim;
     }
     break;
   case VIP_JOIN:
     if (vip_measured_voltage > vip_params.V_free)
     {
       vip_state=VIP_SETTLE;
       vip_dI=vip_params.SETTLE_dI;
       vip_Iend=vip_params.SETTLE_Iend;
       vip_time=vip_params.SETTLE_tlim;
     }
     else if (vip_time<=0)
     {
       vip_state=VIP_RELEASE;
       vip_dI=vip_params.RELEASE_dI;
       vip_Iend=vip_params.RELEASE_Iend;
     }
     break;
   case VIP_RELEASE:
     if (vip_measured_voltage > vip_params.V_free)
     {
       vip_state=VIP_SETTLE;
       vip_dI=vip_params.SETTLE_dI;
       vip_Iend=vip_params.SETTLE_Iend;
       vip_time=vip_params.SETTLE_tlim;
     }
     break;
   case VIP_SETTLE:
     if (vip_time<=0)
     {
       vip_state=VIP_ENERGY;
       vip_dI=vip_params.ENERGY_dI;
       vip_Iend=vip_params.ENERGY_Iend;
       vip_time=vip_params.ENERGY_tlim;
     }
     break;
   case VIP_ENERGY:
     if (vip_measured_voltage < vip_params.V_short_circuit)
     {
       vip_state=VIP_TOUCH;
       vip_dI=vip_params.TOUCH_dI;
       vip_Iend=vip_params.TOUCH_Iend;
       vip_time=vip_params.TOUCH_tlim;
     }
     else if (vip_time<=0)
     {
       vip_state=VIP_PRESHORT;
       vip_dI=vip_params.PRESHORT_dI;
       vip_Iend=vip_params.PRESHORT_Iend;
     }
     break;
   case VIP_PRESHORT:
     if (vip_measured_voltage < vip_params.V_short_circuit)
     {
       vip_state=VIP_TOUCH;
       vip_dI=vip_params.TOUCH_dI;
       vip_Iend=vip_params.TOUCH_Iend;
       vip_time=vip_params.TOUCH_tlim;
     }
     break;
  }
   if (vip_Iprofile+vip_dI<vip_Iend)
       vip_Iprofile=vip_Iprofile+vip_dI;
   else if (vip_Iprofile-vip_dI>vip_Iend)
       vip_Iprofile=vip_Iprofile-vip_dI;
   else vip_Iprofile=vip_Iend;
 }
```

The parameter vip_Iprofile is outputted to a digital/analog converter and supplied to the welding inverter 52 for controlling the current output of said inverter 52.

To every phase belongs an adjustable end-current vip_Iend and an adjustable slope vip_dI for increasing the current output towards the end-current vip_Iend.

The controlling device 51 also activates the waveform generator 53 for superimposing the periodic signal 30 onto the current output of the inverter 52. In a further exemplary embodiment the controlling device 51 may also control one or more of the frequency, the amplitude and the waveform of the periodic signal 30.

Furthermore, a background current may be added to the current output. This background current may be used to adjust the average measured welding voltage to a preferred value.

The welding apparatus further comprises a voltmeter 54 to measure the welding voltage. The voltmeter 54 supplies a feedback signal proportional to the welding voltage, to the controlling device 51. The parameter vip_measured_voltage comprises this feedback signal. During the above described procedure, the vip_measured_voltage is compared with preset reference voltages V_short_circuit and V_free.

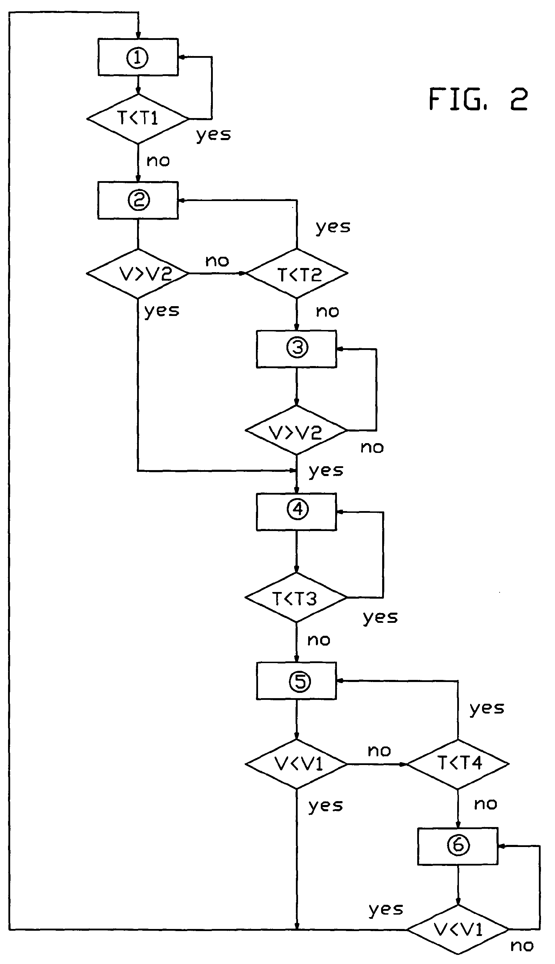

The various steps of the procedure as describe above are illustrated in a block diagram in figure 2.

The Touch phase 1 starts after the measured welding voltage vip_measured_voltage becomes smaller than a preset reference voltage V1, represented by the parameter V_short_circuit. During the Touch phase the current is lowered to a value I1, represented by the parameter TOUCH_Iend, using a preset slope TOUCH_dI. The Touch phase 1 is subsequently followed by the Join phase 2 after expiry of a preset time-period T1, represented by the parameter TOUCH_tlim.

During the Join phase 2 the current is raised to a value I2, represented by the parameter JOIN_Iend, using a preset slope JOIN_dI. The Join phase 2 is normally followed by the Release phase 3 after expiry of a preset time-period T2, represented by the parameter JOIN_tlim. However, if in this Join phase 2 the measured voltage, represented by the parameter vip_measured_voltage, becomes lager than the preset reference voltage V2, represented by the parameter V_free, the procedure will immediately commence with the Settle phase 4, skipping the Release phase 3.

During the Release phase 3 the current is raised towards a value I3, represented by the parameter RELEASE_Iend, using a preset slope RELEASE_dI. Furthermore, during this phase, the periodic signal 30 is superimposed onto the current output. The Release phase 3 will only end when the measured voltage represented by the parameter vip_measured_voltage, becomes lager than the preset reference voltage V2, represented by the parameter V_free. The procedure will then immediately commence with the Settle phase 4.

During the Settle phase 4 the current is lowered to a value I4, represented by the parameter SETTLE_Iend, using a preset slope SETTLE_dI. Furthermore, the periodic signal 30 is no longer necessary and is removed from the current output. The Settle phase 4 is subsequently followed by the Energy phase 5 after expiry of a preset time-period T3, represented by the parameter SETTLE_tlim.

During the Energy phase 5 the current is raised to a value I5, represented by the parameter ENERGY_Iend, using a preset slope ENERGY_dI. The Energy phase 5 is normally followed by the Pre-short-circuit phase 6 after expiry of a preset time-period T4, represented by the parameter ENERGY_tlim. However, if during this Energy phase 5 the measured voltage represented by the parameter vip_measured_voltage becomes lower than the preset reference voltage V1, represented by the parameter V_short_circuit, the procedure will immediately commence with the Touch phase 1, skipping the Pre-short phase 6.

During the Pre-short phase 6 the current is lowered to a value I6, represented by the parameter PRESHORT_Iend, using a preset slope PRESHORT_dI. The Pre-shortcircuit phase 6 will only end when the measured voltage represented by the parameter vip_measured_voltage, becomes lower than the preset reference voltage V1, represented by the parameter V_short_circuit. Subsequently, the procedure will commence with the Touch phase 1, and the cycle is repeated by continuing with the Join phase 2, Release phase 3, etcetera...

Typically, the cycle is repeated at a frequency of approximately 50 Hz.

Many of the parameters in the above disclosed procedure are adjustable and can be set by the user in order to further optimize the welding process of the invention. Preferably the parameters are adjustable within the typical ranges, as disclosed below:
TOUCH_dI = 300 - 1200 [A/ms]
TOUCH_Iend = 15.0 - 100.0 [A] correspond to I1
TOUCH_tlim = 0.05 - 0.25 [ms] correspond to T1
JOIN_dI = 100 - 400 [A/ms]
JOIN_Iend = 60.0 - 250.0 [A] correspond to I2
JOIN_tlim = 0.25 - 1.00 [ms] correspond to T2
RELEASE_dI = 20 - 100 [A/ms]
RELEASE_Iend = 200.0 - 600.0 [A] correspond to I3
SETTLE_dI = 500 - 1500 [A/ms]
SETTLE_Iend = 15.0 - 50.0 [A] correspond to I4
SETTLE_tlim = 0.40 - 2.00 [ms] correspond to T3
ENERGY_dI = 400 - 1500 [A/ms]
ENERGY_Iend = 100.0 - 600.0 [A] correspond to I5
ENERGY_tlim = 0.70 - 5.00 [ms] correspond to T4
PRESHORT_dI = 100 - 600 [A/ms]
PRESHORT_Iend = 20.0 - 80.0 [A] correspond to I6
V_short_circuit = 2.0 - 12.0 [V] correspond to V1
V_free = 8.0 - 20.0 [V] correspond to V2

It should be noted that when the measured voltage is below 6 V, the arc is usually not ignited and the short-circuit is not cleared. When the measured voltage is above 12 V, the short-circuit is usually cleared, even if the earth-clamp 56 is poorly connected.

Furthermore, in a process where the current during the Release phase 3 is, for example, varied between 175 and 220 A, the periodic signal has typically a frequency of approximately 5 kHz and an amplitude of approximately 20 to 25 A.

The actual values of the parameters set by the user may vary and are, among other things, dependent on the composition of the welding wire, the composition of the material of the workpiece to be welded, the thickness of the workpiece, the type of pre-treat of the workpiece and/or welding site, etcetera...

Furthermore, the values used for the parameters may be dependent on the use and type of screening gas. Often a pre-mixed gas is used. One supplier may deliver a gasmixture of, for example, 80/20 % Argon/CO₂, whereas an other supplier may deliver a gasmixture of, for example, 82/18 % Argon/CO₂. Pure CO₂ may be an economical alternative. For the various type and/or mixture of screening gas, the values of the parameters may be adjusted by the used to obtain optimum welding conditions, and in particular a minimal spatter.

The method described above is preferably used for welding together of a first workpiece with a second workpiece, in particular for welding together of two pipes. When welding two pipes to each other in order to form a pipeline for for instance gas or oil, the end edges of the pipes are brought together, in which the end edges are kept in line at a little distance from each other by means of positioning means, in particular in which the outer side of the one pipe is engaged tightly with the help of first clamping means and the outer side of the other pipe is engaged tightly with the help of second clamping means, in which the first and second clamping means are kept in line and with their ends close to or against each other by means of a rigid frame on which both clamping means are arranged. Such a clamping device is, for example, disclosed in the United States Patent Application 2002153406.

After the pipes have been set the weld is made with the help of an auto-welder or welding robot, comprising a welding apparatus of the invention, moving over the outer circumference. The welding seam is made from the outside for connecting both pipes. Typically the welding wire used has a diameter of 0,9 to 1,2 mm, and is supplied with a velocity of 3,5 to 10 m/minute, preferably higher than 6 m/minute. The auto-welder is moved around the outer circumference with a velocity of typically 20 to 100 cm/minute.

After the weld is completed, the frame with the first and the second clamping means and with the welding means is moved along and over the other pipe to the other end of the other pipe for repeating the aforementioned welding process the other pipe and a next pipe.

It is to be understood that the invention is not limited in its application to the details of construction and arrangement of the components or to the details of the method steps set forth in the exemplary embodiments as described above and illustrated in the drawings. The invention is capable of other embodiments or of being practiced or carried out in various ways.

For example, in stead of or in addition to the raising of the current in the Release phase 3, also the frequency of the periodic signal may be varied, in particular said frequency may be raised during the Release phase 3.

Furthermore, the method and apparatus of the invention are ideally suitable for using in automated welding processes. However, said method and apparatus of the invention may also be used in a manually operated welding process.

## Claims

1. Method of welding by depositing drops (11) of molten metal at the end of a welding electrode (10) into a weld puddle (20) for short-circuit arc welding, comprising the steps of:
moving the welding electrode (10) towards the weld puddle (20), at least until the drop (11) of molten metal at the end of a welding electrode (10) short-circuits with the weld puddle (20);
providing a current I₂ to the welding electrode (10) ;
superimposing a periodic signal (30) having a frequency and an amplitude onto the current, at least until after the short-circuit has cleared; and
removing the periodic signal from the current after the short-circuit has cleared.

2. Method according to claim 1, wherein the current and/or the frequency of the periodic signal (30) is adjusted, preferably continuously varied, at least until after the short-circuit has cleared.

3. Method according to claim 1 or 2, wherein the frequency of the periodic signal (30) is tuned to a value substantially equal to a resonance frequency of a liquid metal column between the welding electrode (10) and the weld puddle (20) and/or wherein a resonance frequency of the liquid metal column between the welding electrode (10) and the weld puddle (20) is tuned to a value substantially equal to the frequency of the periodic signal (30).

4. Method according to claim 1, 2 or 3, further comprising the steps of:
providing a feedback signal proportional to a voltage across the welding electrode (10) and the weld puddle (20) ;
determining when the feedback signal reaches a first reference value V1 corresponding to a short-circuit circuiting of the welding electrode (10) and the weld puddle (20) ;
providing a current I₂ to the welding electrode and superimposing the periodic signal (30) onto the current;
increasing the current level with the periodic signal superimposed thereon after the feedback signal has reached the first reference value V1, which increasing preferably comprises the increasing of the average value of the current and/or the increasing of the amplitude of the periodic signal;
determining when the feedback signal reaches a second reference value V2 corresponding to a clearing of the short-circuit circuiting; and
decreasing the current through the welding electrode after the feedback signal has reached the second reference value V2.

5. Method for producing a line shaped weld, preferably a continuous line shaped weld, by cyclical repeating the steps according to any one of the preceding claims.

6. Method according to any one of the preceding claims, wherein the welding electrode (10) comprises a consumable welding wire and wherein the method comprises the step of feeding the welding wire towards the weld puddle at a speed equal to or in excess of 3.5 meters per minute, preferable equal to or in excess of 6 meters per minute, and wherein the welding wire is preferably continuously fed towards the weld puddle.

7. Welding apparatus for welding by depositing drops of molten metal at the end of a welding electrode into a weld puddle (20) for short-circuit arc welding, comprising:
a power source (52) comprising a current output in electrical communication with the welding electrode;
modulating means (53) for superimposing a periodic signal (30) having a frequency and an amplitude on the current output of the power source; and
first controlling means (51) for controlling the welding apparatus, wherein the first controlling means comprise a data processing system comprising means adapted to carry out each of the steps as defined in any one of the claims 1 - 6.

8. Welding apparatus according to claim 7, wherein the first controlling means (51) is arranged for adjusting, preferably continuously varying, the current output and/or the frequency of the periodic signal (30) at least during the depositing of the drops of molten metal into th weld puddle (20) and wherein the first controlling means (51) preferably comprises scanning means for scanning the current output and/or the frequency of the periodic signal (30) over a preset range, at least during the depositing of each drop of molten metal into the weld puddle.

9. Welding apparatus according to claim 7, 8 or 9, comprising feedback means (54) for providing a feedback signal proportional to a voltage across the welding electrode (10) and the weld puddle (20) and second controlling means for controlling the current output and or the frequency of the periodic signal, in dependence to the feedback signal.

10. Welding apparatus according to claim 9, comprising a first comparator for determining when the feedback signal reaches a first reference value V1 corresponding to a short-circuit circuiting of the welding electrode and the weld puddle, and a second comparator for determining when the feedback signal reaches a second reference value V2 corresponding to a clearing of the short-circuit circuiting, wherein the second controlling means preferably are arranged for increasing the current through the welding electrode in response to a signal from the first comparator and for decreasing the current through the welding electrode in response to a signal from the second comparator.

11. Welding apparatus according to any one of the claims 7 - 10, wherein the welding electrode (10) comprises a consumable welding wire, wherein the welding apparatus comprises a welding wire feeding means for feeding the welding wire towards the weld puddle, and wherein the welding wire feeding means are preferably arranged for feeding the welding wire at a speed equal to or in excess of 3.5 meters per minute, preferable equal to or in excess of 6 meters per minute.

12. Welding robot comprising a welding apparatus according to any one of the claims 7 - 11.

13. Computer program comprising code means adapted to perform all steps defined in any one of the claims 1 - 6.

14. Computer program product comprising a computer readable medium having a computer readable code embodied thereon, the program being adapted to perform all steps defined in any one of the claims 1-6.

## Patentansprüche

1. Verfahren zum Schweißen durch Ablagerung von Tropfen (11) geschmolzenen Metalls am Ende einer Schweißelektrode (10) in ein Schmelzbad (20) zum Kurzschluss-Lichtbogenschweißen, wobei in dem Verfahren
die Schweißelektrode (10) wenigstens so weit zu dem Schmelzbad (20) bewegt wird, bis der Tropfen (11) geschmolzenen Metalls am Ende einer Schweißelektrode (10) einen Kurzschluss mit dem Schmelzbad (20) herstellt;
ein Strom I₂ an die Schweißelektrode (10) geliefert wird;
ein periodisches Signal (30) mit einer Frequenz und einer Amplitude wenigstens so lange auf den Strom überlagert wird, bis der Kurzschluss aufgelöst wurde; und
das periodische Signal von dem Strom entfernt wird, nachdem der Kurzschluss aufgelöst wurde.

2. Verfahren nach Anspruch 1, wobei der Strom und/oder die Frequenz des periodischen Signals (30) wenigstens so lange angepasst, vorzugsweise kontinuierlich variiert, wird, bis der Kurzschluss aufgelöst wurde.

3. Verfahren nach Anspruch 1 oder 2, wobei die Frequenz des periodischen Signals (30) auf einen Wert eingestellt wird, der im Wesentlichen gleich einer Resonanzfrequenz einer Flüssigmetallsäule zwischen der Schweißelektrode (10) und dem Schmelzbad (20) ist, und/oder wobei eine Resonanzfrequenz der Flüssigmetallsäule zwischen der Schweißelektrode (10) und dem Schmelzbad (20) auf einen Wert eingestellt wird, der im Wesentlichen gleich der Frequenz des periodischen Signals (30) ist.

4. Verfahren nach Anspruch 1, 2 oder 3, in dem ferner
ein Feedback-Signal bereitgestellt wird, das proportional zu einer Spannung zwischen der Schweißelektrode (10) und dem Schmelzbad (20) ist;
festgestellt wird, wenn das Feedback-Signal einen ersten Referenzwert V1 erreicht, der einem Kurzschließen der Schweißelektrode (10) und des Schmelzbads (20) entspricht;
ein Strom I₂ an die Schweißelektrode geliefert wird und das periodische Signal (30) auf den Strom überlagert wird;
das Stromniveau mit dem darauf überlagerten periodischen Signal erhöht wird, nachdem das Feedback-Signal den ersten Referenzwert V1 erreicht hat, wobei bei dem Erhöhen vorzugsweise der Durchschnittswert des Stroms und/oder die Amplitude des periodischen Signals erhöht wird;
festgestellt wird, wenn das Feedback-Signal einen zweiten Referenzwert V2 erreicht, der einem Auflösen des Kurzschlusses entspricht; und
der Strom durch die Schweißelektrode verringert wird, nachdem das Feedback-Signal den zweiten Referenzwert V2 erreicht hat.

5. Verfahren zum Herstellen einer linienförmigen Schweißung, vorzugsweise einer durchgehenden linienförmigen Schweißung, indem die Schritte gemäß einem der vorstehenden Ansprüche zyklisch wiederholt werden.

6. Verfahren nach einem der vorstehenden Ansprüche, wobei die Schweißelektrode (10) einen verzehrbaren Schweißdraht aufweist, und wobei in dem Verfahren der Schweißdraht zu dem Schmelzbad mit einer Geschwindigkeit von mindestens 3,5 Metern pro Minute, vorzugsweise mindestens 6 Metern pro Minute, zugeführt wird, und wobei der Schweißdraht vorzugsweise kontinuierlich zu dem Schmelzbad zugeführt wird.

7. Schweißgerät zum Schweißen durch Ablagerung von Tropfen geschmolzenen Metalls am Ende einer Schweißelektrode in ein Schmelzbad (20) zum Kurzschluss-Lichtbogenschweißen, mit
einer Leistungsquelle (52) mit einer Stromausgabe, die in elektrischer Verbindung mit der Schweißelektrode steht,
einer Modulationseinrichtung (53), um ein periodisches Signal (30) mit einer Frequenz und einer Amplitude auf die Stromausgabe der Leistungsquelle zu überlagern, und
einer ersten Steuereinrichtung (51) zum Steuern des Schweißgeräts, wobei die erste Steuereinrichtung ein Datenverarbeitungssystem aufweist, das eine zur Ausführung der Schritte gemäß einem der Ansprüche 1 bis 6 ausgelegte Einrichtung hat.

8. Schweißgerät nach Anspruch 7, wobei die erste Steuereinrichtung (51) dazu ausgelegt ist, die Stromausgabe und/oder die Frequenz des periodischen Signals (30) wenigstens während der Ablagerung der Tropfen geschmolzenen Metalls in das Schmelzbad (20) anzupassen, vorzugsweise kontinuierlich zu variieren, und wobei die erste Steuereinrichtung (51) vorzugsweise eine Scanvorrichtung aufweist, um das Stromausgabesignal und/oder die Frequenz des periodischen Signals (30) über einen voreingestellten Bereich wenigstens während der Ablagerung jedes Tropfens geschmolzenen Metalls in das Schmelzbad zu scannen.

9. Schweißgerät nach Anspruch 7 oder 8, mit einer Feedback-Einrichtung (54) zum Bereitstellen eines Feedback-Signal, das proportional zu einer Spannung zwischen der Schweißelektrode (10) und dem Schmelzbad (20) ist, und einer zweiten Steuereinrichtung zum Steuern der Stromausgabe und/oder der Frequenz des periodischen Signals in Abhängigkeit von dem Feedback-Signal.

10. Schweißgerät nach Anspruch 9, mit einer ersten Vergleichseinheit, um festzustellen, wenn das Feedback-Signal einen ersten Referenzwert V1 erreicht, der einem Kurzschließen der Schweißelektrode und des Schmelzbads entspricht, und einer zweiten Vergleichseinheit, um festzustellen, wenn das Feedback-Signal einen zweiten Referenzwert V2 erreicht, der einem Auflösen des Kurzschlusses entspricht, wobei die zweite Steuereinrichtung vorzugsweise dazu ausgelegt ist, den Strom durch die Schweißelektrode in Erwiderung auf ein Signal von der ersten Vergleichseinheit zu erhöhen und den Strom durch die Schweißelektrode in Erwiderung auf ein Signal von der zweiten Vergleichseinheit zu verringern.

11. Schweißgerät nach einem der Ansprüche 7 - 10, wobei die Schweißelektrode (10) einen verzehrbaren Schweißdraht aufweist, und wobei das Schweißgerät eine Schweißdrahtzuführeinrichtung aufweist, um den Schweißdraht zu dem Schmelzbad zuzuführen, wobei die Schweißdrahtzuführeinrichtung vorzugsweise dazu ausgelegt ist, den Schweißdraht mit einer Geschwindigkeit von mindestens 3,5 Metern pro Minute, vorzugsweise mindestens 6 Metern pro Minute, zuzuführen.

12. Schweißroboter mit einem Schweißgerät gemäß einem der Ansprüche 7 bis 11.

13. Computerprogramm mit Codemitteln, die dazu ausgelegt ist, alle Schritte gemäß einem der Ansprüche 1 bis 6 auszuführen.

14. Computerprogrammprodukt mit einem computerlesbaren Medium, das einen computerlesbaren Code enthält, wobei das Programm dazu ausgelegt ist, alle Schritte gemäß einem der Ansprüche 1 bis 6 auszuführen.

## Revendications

1. Procédé de soudage par dépôt de gouttes (11) de métal fondu à l'extrémité d'une électrode de soudage (10) dans un bain de fusion (20) pour souder à l'arc par courts-circuits, comprenant les étapes de :
déplacement de l'électrode de soudage (10) vers le bain de fusion (20), au moins jusqu'à ce que la goutte (11) de métal fondu à l'extrémité d'une électrode de soudage (10) vienne en court-circuit avec le bain de fusion (20) ;
fourniture d'un courant I₂ à l'électrode de soudage (10) ;
superposition d'un signal périodique (30) ayant une fréquence et une amplitude au courant, au moins jusqu'à ce que le court-circuit soit supprimé ; et
retrait du signal périodique du courant après que le court-circuit a été supprimé.

2. Procédé selon la revendication 1, dans lequel le courant et/ou la fréquence du signal périodique (30) est ajusté, de préférence modifiés continûment, au moins jusqu'à ce que le court-circuit ait été supprimé.

3. Procédé selon la revendication 1 ou 2, dans lequel la fréquence du signal périodique (30) est accordée à une valeur sensiblement égale à une fréquence de résonance d'une colonne de métal liquide entre l'électrode de soudage (10) et le bain de fusion (20), et/ou dans lequel une fréquence de résonance de la colonne de métal liquide entre l'électrode de soudage (10) et le bain de fusion (20) est accordée à une valeur sensiblement égale à la fréquence du signal périodique (30).

4. Procédé selon la revendication 1, 2 ou 3, comprenant en outre les étapes de :
fourniture d'un signal de rétroaction proportionnel à une tension entre l'électrode de soudage (10) et le bain de fusion (20) ;
détermination de l'instant auquel le signal de rétroaction atteint une première valeur de référence V1 correspondant à une mise en court-circuit de l'électrode de soudage (10) et du bain de fusion (20) ;
fourniture d'un courant I₂ à l'électrode de soudage et de superposition du signal périodique (30) au courant ;
augmentation du niveau de courant avec le signal périodique superposé à celui-ci après que le signal de rétroaction a atteint la première valeur de référence V1, laquelle augmentation comprend de préférence l'augmentation de la valeur moyenne du courant et/ou l'augmentation de l'amplitude du signal périodique ;
détermination de l'instant auquel le signal de rétroaction atteint une deuxième valeur de référence V2 correspondant à une suppression de la mise en court-circuit ; et
diminution du courant à travers l'électrode de soudage après que le signal de rétroaction a atteint la deuxième valeur de référence V2.

5. Procédé pour produire une soudure en forme de cordon, de préférence une soudure en forme de cordon continu, en répétant de manière cyclique les étapes selon l'une quelconque des revendications précédentes.

6. Procédé selon l'une quelconque des revendications précédentes, dans lequel l'électrode de soudage (10) comprend un fil de soudage fusible, et dans lequel le procédé comprend l'étape d'avance du fil de soudage vers le bain de fusion à une vitesse égale ou supérieure à 3,5 mètres par minute, de préférence égale ou supérieure à 6 mètres par minute, et dans lequel le fil de soudage est de préférence avancé continûment vers le bain de fusion.

7. Appareil de soudage pour souder par dépôt de gouttes de métal fondu à l'extrémité d'une électrode de soudage dans un bain de fusion (20) pour souder à l'arc par courts-circuits, comprenant :
une source de puissance (52) comprenant une sortie de courant en communication électrique avec l'électrode de soudage ;
des moyens de modulation (53) pour superposer un signal périodique (30) ayant une fréquence et une amplitude à la sortie de courant de la source de puissance ; et
des premiers moyens de commande (51) pour commander l'appareil de soudage, dans lequel les premiers moyens de commande comprennent un système de traitement de données comprenant des moyens conçus pour effectuer chacune des étapes telles que définies dans l'une quelconque des revendications 1 à 6.

8. Appareil de soudage selon la revendication 7, dans lequel les premiers moyens de commande (51) sont agencés pour ajuster, de préférence modifier continûment, la sortie de courant et/ou la fréquence du signal périodique (30) au moins pendant le dépôt des gouttes de métal fondu dans le bain de fusion (20), et dans lequel les premiers moyens de commande (51) comprennent de préférence des moyens de balayage pour balayer la sortie de courant et/ou la fréquence du signal périodique (30) dans une plage prédéterminée, au moins pendant le dépôt de chaque goutte de métal fondu dans le bain de fusion.

9. Appareil de soudage selon la revendication 7 ou 8, comprenant des moyens de rétroaction (54) pour fournir un signal de rétroaction proportionnel à une tension entre l'électrode de soudage (10) et le bain de fusion (20), et des deuxièmes moyens de commande pour commander la sortie de courant et ou la fréquence du signal périodique, en fonction du signal de rétroaction.

10. Appareil de soudage selon la revendication 9, comprenant un premier comparateur pour déterminer l'instant auquel le signal de rétroaction atteint une première valeur de référence V1 correspondant à une mise en court-circuit de l'électrode de soudage et du bain de fusion, et un deuxième comparateur pour déterminer l'instant auquel le signal de rétroaction atteint une deuxième valeur de référence V2 correspondant à une suppression de la mise en court-circuit, dans lequel les deuxièmes moyens de commande sont de préférence agencés pour augmenter le courant à travers l'électrode de soudage en réponse à un signal provenant du premier comparateur et pour diminuer le courant à travers l'électrode de soudage en réponse à un signal provenant du deuxième comparateur.

11. Appareil de soudage selon l'une quelconque des revendications 7 à 10, dans lequel l'électrode de soudage (10) comprend un fil de soudage fusible, dans lequel l'appareil de soudage comprend des moyens d'avance de fil de soudage pour avancer le fil de soudage vers le bain de fusion, et dans lequel les moyens d'avance de fil de soudage sont de préférence agencés pour avancer le fil de soudage à une vitesse égale ou supérieure à 3,5 mètres par minute, de préférence égale ou supérieure à 6 mètres par minute.

12. Robot de soudage comprenant un appareil de soudage selon l'une quelconque des revendications 7 à 11.

13. Programme d'ordinateur comprenant des moyens de code adaptés pour effectuer toutes les étapes définies dans l'une quelconque des revendications 1 à 6.

14. Produit-programme d'ordinateur comprenant un support pouvant être lu par un ordinateur sur lequel est intégré un code pouvant être lu par un ordinateur, le programme étant conçu pour effectuer toutes les étapes définies dans l'une quelconque des revendications 1 à 6.
